# EUROPEAN PATENT APPLICATION

(11) **EP 4 783 039 A1**
(43) Date of publication of application: **29.07.2026**
(21) Application number: 24878941.4
(22) Date of filing: 14.10.2024
(51) Int. Cl.: G06F 21/31

(54) **POLICY PREVIEW METHOD BASED ON CLOUD MANAGEMENT PLATFORM, AND CLOUD MANAGEMENT PLATFORM**

(30) Priority: 19.10.2023 CN 202311360093; 05.01.2024 CN 202410020480
(71) Applicant: Huawei Cloud Computing Technologies Co., Ltd., Gui'an New District, Guizhou 550025 (CN)
(72) Inventor: CHEN, Songyang, Guiyang, Guizhou 550025 (CN); ZHANG, Tianyu, Guiyang, Guizhou 550025 (CN)
(74) Representative: Pfenning, Meinig & Partner mbB
(86) International application number: PCT/CN2024/124625
(87) International publication number: WO 2025/082297

(57) **Abstract**

This application discloses a policy preview method based on a cloud management platform and a cloud management platform, to help a tenant formulate better access control policies. The cloud management platform performs authentication on the tenant according to the access control policies, to achieve a better effect. The method in this application includes: A cloud management platform receives, through an editing interface, a first access control policy and assignment information that are input by a tenant, where the first access control policy includes a first parameter to which a value is to be assigned, and the first access control policy is used for the cloud management platform to perform authentication on the tenant; if the assignment information includes a first value set by the tenant for the first parameter, the cloud management platform assigns, based on the first value, a value to the first parameter in the first access control policy, to obtain a second parameter with the value assigned and a second access control policy including the second parameter; and the cloud management platform displays the second access control policy to the tenant through a preview interface, where the second access control policy indicates whether the authentication performed by the cloud management platform on the tenant succeeds or fails.

## Description

This application claims priorities to Chinese Patent Application No. 202311360093.4, filed with the China National Intellectual Property Administration on October 19, 2023 and entitled "POLICY VARIABLE PREVIEW METHOD BASED ON CLOUD MANAGEMENT PLATFORM AND CLOUD MANAGEMENT PLATFORM", and to Chinese Patent Application No. 202410020480.1, filed with the China National Intellectual Property Administration on January 5, 2024 and entitled "POLICY PREVIEW METHOD BASED ON CLOUD MANAGEMENT PLATFORM AND CLOUD MANAGEMENT PLATFORM", both of which are incorporated herein by reference in their entireties.

### TECHNICAL FIELD

Embodiments of this application relate to the field of cloud technologies, and in particular, to a policy preview method based on a cloud management platform and a cloud management platform.

### BACKGROUND

In a cloud service system, when a tenant accesses a cloud management platform, the cloud management platform usually needs to perform authentication on the tenant first. Therefore, an attribute-based access control (attribute-based access control, ABAC) mechanism emerges. The mechanism defines tenant-oriented access control, and can perform authentication on the tenant according to a preset access control policy, to allow or reject access by the tenant based on an authentication result.

In a related technology, the access control policy is usually formulated by the tenant in advance. After receiving the access control policy formulated by the tenant in advance, the cloud management platform stores the access control policy formulated by the tenant. In this case, when the tenant accesses the cloud management platform subsequently, in other words, when the tenant sends a request to the cloud management platform, the cloud management platform may process the access control policy by using the request, to obtain a processed access control policy. In this case, the cloud management platform may determine, based on content expressed by the processed access control policy, whether the authentication on the tenant succeeds.

In the foregoing process, when the tenant sends, to the cloud management platform, the access control policy specified by the tenant, the cloud management platform usually performs only syntax check on the access control policy, so that the tenant can formulate an access control policy with correct syntax. In this case, a factor considered for checking the access control policy is simple. Consequently, an effect of performing authentication on the tenant according to the access control policy obtained in this manner is usually poor.

### SUMMARY

Embodiments of this application provide a policy preview method based on a cloud management platform and a cloud management platform, to help a tenant formulate better access control policies. Therefore, the cloud management platform performs authentication on the tenant according to the access control policies, to achieve a better effect.

A first aspect of embodiments of this application provides a policy preview method based on a cloud management platform. The method includes:

When a tenant has a requirement for formulating an access control policy, a cloud management platform may provide an editing interface for the tenant. Thus, the tenant may send, to the editing interface, a first access control policy and assignment information that are formulated by the tenant, so that the cloud management platform receives, through the editing interface, the first access control policy and the assignment information that are sent by the tenant. It should be noted that the first access control policy formulated by the tenant may be presented as a first text written by the tenant. The first text includes a first parameter to which a value is to be assigned. Content described in the first text is usually content that the tenant indicates how the cloud management platform performs authentication on the tenant. Because no value is assigned to the first parameter, the content is usually incomplete and to be supplemented.

After obtaining the first access control policy and the assignment information that are formulated by the tenant, the cloud management platform may detect whether the assignment information includes a first value set by the tenant for the first parameter. If the assignment information includes the first value, the cloud management platform may assign, by using the first value, a value to the first parameter in the first access control policy, to obtain a second parameter with the value assigned and a second access control policy including the second parameter. In this case, the cloud management platform completes simulated assignment for the first access control policy, to obtain the second access control policy.

After obtaining the second access control policy, the cloud management platform may provide a preview interface for the tenant, to display the second access control policy to the tenant through the preview interface, so that the tenant can determine, based on content of the second access control policy, whether simulated authentication performed by the cloud management platform on the tenant succeeds, and determine whether the first access control policy formulated by the tenant is available.

It can be learned from the foregoing method that the cloud management platform may be combined with the first access control policy. In the foregoing process, after completing, by using the assignment information formulated by the tenant, the simulated assignment for the first access control policy formulated by the tenant, the cloud management platform displays the obtained second access control policy to the tenant through a visual interface (that is, the preview interface). Therefore, the cloud management platform may not only display, to the tenant, content that is of the second access control policy and that does not change in comparison with the first access control policy, but also display, to the tenant, content that is of the second access control policy and that changes in comparison with the first access control policy. The tenant may check whether the content that does not change (to be specific, content that describes how the cloud management platform performs authentication on the tenant and that is set by the tenant) has a syntax problem or the like, and may further determine whether the content that changes (to be specific, a replacement parameter, for example, the second parameter that replaces the first parameter) meets a requirement of the tenant and a factor to be considered. In this way, a comprehensive factor may be considered for checking the first access control policy, and authentication is performed on the tenant by using the first access control policy obtained through check in this manner, to achieve a better effect.

In a possible implementation, that if the assignment information includes the first value set by the tenant for the first parameter, the cloud management platform assigns, based on the first value, the value to the first parameter in the first access control policy, to obtain the second parameter with the value assigned and the second access control policy including the second parameter includes: If the assignment information includes the first value, and the first access control policy does not include a second value set by the tenant for the first parameter, the cloud management platform assigns, based on the first value, a value to the first parameter in the first access control policy, to obtain the second parameter with the value assigned and the second access control policy including the second parameter. In the foregoing implementation, after obtaining the first access control policy and the assignment information that are formulated by the tenant, the cloud management platform may detect whether the assignment information includes the first value set by the tenant for the first parameter and whether the first access control policy includes the second value set by the tenant for the first parameter. If the assignment information includes the first value, and the first access control policy does not include the second value, the cloud management platform may directly assign, by using the first value, a value to the first parameter in the first access control policy, to obtain the second parameter with the value assigned and the second access control policy including the second parameter. It can be learned that, if the tenant specifies, only in the assignment information formulated by the tenant, a specified value (that is, the first value) of a parameter in an access control policy (that is, the first access control policy) for which a value is to be assigned, the cloud management platform performs, by using the specified value, simulated assignment to the parameter, to obtain an access control policy (that is, the second access control policy) with the value assigned. Therefore, both the cloud management platform and the tenant may determine, based on content of the access control policy with the value assigned, whether the simulated authentication performed by the cloud management platform on the tenant succeeds, and determine whether the access control policy formulated by the tenant is available.

In a possible implementation, that if the assignment information includes the first value set by the tenant for the first parameter, the cloud management platform assigns, based on the first value, the value to the first parameter in the first access control policy, to obtain the second parameter with the value assigned and the second access control policy including the second parameter includes: If the assignment information includes the first value, and the first access control policy includes the second value set by the tenant for the first parameter, the cloud management platform assigns, based on the first value, a value to the first parameter in the first access control policy, to obtain the second parameter with the value assigned and the second access control policy including the second parameter. In the foregoing implementation, after obtaining the first access control policy and the assignment information that are formulated by the tenant, the cloud management platform may detect whether the assignment information includes the first value set by the tenant for the first parameter and whether the first access control policy includes the second value set by the tenant for the first parameter. If the assignment information includes the first value, and the first access control policy includes the second value, because a priority of the second value is lower than a priority of the first value, the cloud management platform may assign, by using the first value, a value to the first parameter in the first access control policy, to obtain the second parameter with the value assigned and the second access control policy including the second parameter. It can be learned that, if the tenant not only specifies, in the assignment information formulated by the tenant, the specified value of the parameter in the access control policy for which a value is to be assigned, but also specifies a default value (that is, the second value) of the parameter in the access control policy for which a value is to be assigned and that is formulated by the tenant, the cloud management platform preferentially performs, by using the specified value, simulated assignment to the parameter, to obtain an access control policy with the value assigned. Therefore, both the cloud management platform and the tenant may determine, based on content of the access control policy with the value assigned, whether the simulated authentication performed by the cloud management platform on the tenant succeeds, and determine whether the access control policy formulated by the tenant is available.

In a possible implementation, the method further includes: If the assignment information does not include the first value, and the first access control policy includes the second value set by the tenant for the first parameter, the cloud management platform assigns, based on the second value, a value to the first parameter in the first access control policy, to obtain a third parameter with the value assigned and a third access control policy including the third parameter; and the cloud management platform displays the third access control policy to the tenant through the preview interface, where the third access control policy indicates whether the authentication performed by the cloud management platform on the tenant succeeds or fails. In the foregoing implementation, if the assignment information does not include the first value, the cloud management platform may detect whether the first access control policy includes the second value set by the tenant for the first parameter. If the first access control policy includes the second value, the cloud management platform may assign, by using the second value, a value to the first parameter in the first access control policy, to obtain the third parameter with the value assigned and the third access control policy including the third parameter. In this case, the cloud management platform completes the simulated assignment for the first access control, to obtain the third access control policy. After obtaining the third access control policy, the cloud management platform may provide the preview interface for the tenant, to display the third access control policy to the tenant through the preview interface, so that the tenant determines, based on content of the third access control policy, whether the first access control policy formulated by the tenant is available. It can be learned that, if the tenant does not specify, in the assignment information formulated by the tenant, the specified value of the parameter in the access control policy for which a value is to be assigned, and only specifies the default value of the parameter in the access control policy for which a value is to be assigned and that is formulated by the tenant, the cloud management platform performs, by using the default value, simulated assignment to the parameter, to obtain an access control policy (that is, the third access control policy) with the value assigned. Therefore, both the cloud management platform and the tenant may determine, based on content of the access control policy with the value assigned, whether the simulated authentication performed by the cloud management platform on the tenant succeeds, and determine whether the access control policy formulated by the tenant is available.

In a possible implementation, the method further includes: If the assignment information does not include the first value, and the first access control policy does not include the second value set by the tenant for the first parameter, the cloud management platform displays an assignment result to the tenant through the preview interface, where the assignment result includes a location of the first parameter in the first access control policy and notification information indicating that assignment to the first parameter fails, and the assignment result indicates that the authentication performed by the cloud management platform on the tenant fails. In the foregoing implementation, if the first access control policy does not include the second value, the cloud management platform may directly determine that the simulated assignment for the first access control policy cannot be completed, that is, directly determine that the simulated authentication on the tenant fails. For this case, the cloud management platform may generate the assignment result indicating this case. The assignment result includes the location of the first parameter in the first access control policy and the notification information indicating that the assignment to the first parameter fails. Therefore, the preview interface may be provided for the tenant, to display the assignment result to the tenant through the preview interface. In this case, after viewing the assignment result, the tenant may determine that the first access control policy formulated by the tenant is unavailable, and re-adjust the first access control policy and/or the assignment information. It can be learned that, if the tenant does not specify, in the assignment information formulated by the tenant, the specified value of the parameter in the access control policy for which a value is to be assigned, and does not specify the default value of the parameter in the access control policy for which a value is to be assigned and that is formulated by the tenant, the cloud management platform cannot complete the simulated assignment, that is, the simulated authentication on the tenant fails. Therefore, the cloud management platform may notify the tenant of the case, so that the tenant determines that the access control policy formulated by the tenant is unavailable, and re-adjusts the access control policy and/or the assignment information.

In a possible implementation, the method further includes: The cloud management platform performs, according to a preset semantic rule, semantic analysis on the second parameter, to obtain a first semantic analysis result of the second parameter, where if the first semantic analysis result indicates that the second parameter complies with the semantic rule, the second access control policy indicates that the authentication performed by the cloud management platform on the tenant succeeds, or if the first semantic analysis result indicates that the second parameter does not comply with the semantic rule, the second access control policy indicates that the authentication performed by the cloud management platform on the tenant fails; and the cloud management platform displays the first semantic analysis result to the tenant through the preview interface. In the foregoing implementation, after obtaining the second access control policy, the cloud management platform may obtain the preset semantic rule, and perform, according to the preset semantic rule, semantic analysis on the second parameter included in the second access control policy, to obtain the first semantic analysis result of the second parameter. If the first semantic analysis result indicates that the second parameter complies with the preset semantic rule, that is, indicates that the second access control policy has no semantic problem, the cloud management platform may determine that the simulated authentication on the tenant succeeds. If the first semantic analysis result indicates that the second parameter does not comply with the semantic rule, that is, indicates that the second access control policy has a semantic problem, the cloud management platform may determine that the simulated authentication on the tenant fails. Then, the cloud management platform may display the first semantic analysis result to the tenant through the preview interface, so that the tenant can view the first semantic analysis result, to determine whether the first access control policy formulated by the tenant is available. It can be learned that, if the cloud management platform determines that a semantic problem (for example, the second parameter that replaces the first parameter does not comply with the preset semantic rule) occurs in content that is of the second access control policy and that changes in comparison with the first access control policy, the cloud management platform may further notify the tenant through a visual interface. In this case, the tenant performs targeted adjustment on the first access control policy and/or the assignment information that are/is formulated by the tenant, to improve user experience and policy adjustment efficiency.

In a possible implementation, the method further includes: The cloud management platform performs, according to a preset semantic rule, semantic analysis on the third parameter, to obtain a second semantic analysis result of the third parameter, where if the second semantic analysis result indicates that the third parameter complies with the semantic rule, the third access control policy indicates that the authentication performed by the cloud management platform on the tenant succeeds, or if the second semantic analysis result indicates that the third parameter does not comply with the semantic rule, the third access control policy indicates that the authentication performed by the cloud management platform on the tenant fails; and the cloud management platform displays the second semantic analysis result to the tenant through the preview interface. In the foregoing implementation, after obtaining the third access control policy, the cloud management platform may obtain the preset semantic rule, and perform, according to the preset semantic rule, semantic analysis on the third parameter included in the third access control policy, to obtain the second semantic analysis result of the third parameter. If the second semantic analysis result indicates that the third parameter complies with the preset semantic rule, that is, indicates that the third access control policy has no semantic problem, the cloud management platform may determine that the simulated authentication on the tenant succeeds. If the second semantic analysis result indicates that the third parameter does not comply with the semantic rule, that is, indicates that the third access control policy has a semantic problem, the cloud management platform may determine that the simulated authentication on the tenant fails. Then, the cloud management platform may display the second semantic analysis result to the tenant through the preview interface, so that the tenant can view the second semantic analysis result, to determine whether the third access control policy formulated by the tenant is available. It can be learned that, if the cloud management platform determines that a semantic problem (for example, the third parameter that replaces the first parameter does not comply with the preset semantic rule) occurs in content that is of the third access control policy and that changes in comparison with the first access control policy, the cloud management platform may further notify the tenant through a visual interface. In this case, the tenant performs targeted adjustment on the first access control policy and/or the assignment information that are/is formulated by the tenant, to improve user experience and policy adjustment efficiency.

A second aspect of embodiments of this application provides a cloud management platform. The cloud management platform includes: a receiving module, configured to receive, through an editing interface, a first access control policy and assignment information that are input by a tenant, where the first access control policy includes a first parameter to which a value is to be assigned, and the first access control policy is used for the cloud management platform to perform authentication on the tenant; an assignment module, configured to: if the assignment information includes a first value set by the tenant for the first parameter, assign, based on the first value, a value to the first parameter in the first access control policy, to obtain a second parameter with the value assigned and a second access control policy including the second parameter; and a displaying module, configured to display the second access control policy to the tenant through a preview interface, where the second access control policy indicates whether the authentication performed by the cloud management platform on the tenant succeeds or fails.

In a possible implementation, the assignment module is configured to: if the assignment information includes the first value, and the first access control policy does not include a second value set by the tenant for the first parameter, assign, based on the first value, a value to the first parameter in the first access control policy, to obtain the second parameter with the value assigned and the second access control policy including the second parameter.

In a possible implementation, the assignment module is configured to: if the assignment information includes the first value, and the first access control policy includes the second value set by the tenant for the first parameter, assign, based on the first value, a value to the first parameter in the first access control policy, to obtain the second parameter with the value assigned and the second access control policy including the second parameter.

In a possible implementation, the assignment module is further configured to: if the assignment information does not include the first value, and the first access control policy includes the second value set by the tenant for the first parameter, assign, based on the second value, a value to the first parameter in the first access control policy, to obtain a third parameter with the value assigned and a third access control policy including the third parameter. The displaying module is further configured to display the third access control policy to the tenant through the preview interface, where the third access control policy indicates whether the authentication performed by the cloud management platform on the tenant succeeds or fails.

In a possible implementation, the assignment module is further configured to: if the assignment information does not include the first value, and the first access control policy does not include the second value set by the tenant for the first parameter, display an assignment result to the tenant through the preview interface, where the assignment result includes a location of the first parameter in the first access control policy and notification information indicating that assignment to the first parameter fails, and the assignment result indicates that the authentication performed by the cloud management platform on the tenant fails.

In a possible implementation, the cloud management platform further includes: a semantic analysis module, configured to perform, according to a preset semantic rule, semantic analysis on the second parameter, to obtain a first semantic analysis result of the second parameter, where if the first semantic analysis result indicates that the second parameter complies with the semantic rule, the second access control policy indicates that the authentication performed by the cloud management platform on the tenant succeeds, or if the first semantic analysis result indicates that the second parameter does not comply with the semantic rule, the second access control policy indicates that the authentication performed by the cloud management platform on the tenant fails. The displaying module is further configured to display the first semantic analysis result to the tenant through the preview interface.

In a possible implementation, the cloud management platform further includes: a semantic analysis module, configured to perform, according to a preset semantic rule, semantic analysis on the third parameter, to obtain a second semantic analysis result of the third parameter, where if the second semantic analysis result indicates that the third parameter complies with the semantic rule, the third access control policy indicates that the authentication performed by the cloud management platform on the tenant succeeds, or if the second semantic analysis result indicates that the third parameter does not comply with the semantic rule, the third access control policy indicates that the authentication performed by the cloud management platform on the tenant fails. The displaying module is further configured to display the second semantic analysis result to the tenant through the preview interface.

A third aspect of embodiments of this application provides a compute device cluster. The compute device cluster includes at least one compute device, and each compute device includes a processor and a memory. The memory is configured to store instructions. The processor is configured to cause, according to the instructions, the compute device cluster to perform the method according to the first aspect or any one of the possible implementations of the first aspect.

A fourth aspect of embodiments of this application provides a computer storage medium. The computer storage medium stores one or more instructions. When the instructions are executed by one or more computers, the one or more computers are caused to perform the method according to the first aspect or any one of the possible implementations of the first aspect.

A fifth aspect of embodiments of this application provides a computer program product. The computer program product stores instructions. When the instructions are executed by a computer, the computer is caused to perform the method according to the first aspect or any one of the possible implementations of the first aspect.

In embodiments of this application, when a tenant needs to formulate an access control policy, a cloud management platform may provide an editing interface for the tenant, so that the tenant inputs, to the editing interface, a first access control policy and assignment information that are formulated by the tenant. Therefore, the cloud management platform may receive, through the editing interface, the first access control policy and the assignment information that are from the tenant. The first access control policy includes a first parameter to which a value is to be assigned, and the first access control policy may be used for the cloud management platform to perform simulated authentication on the tenant. Then, the cloud management platform may detect whether the assignment information includes a first value set by the tenant for the first parameter. If the assignment information includes the first value, the cloud management platform performs, based on the first value, simulated assignment to the first parameter in the first access control policy, to obtain a second parameter with the value assigned and a second access control policy including the second parameter. Then, the cloud management platform may display the second access control policy to the tenant through a preview interface, so that the tenant can determine, based on content of the second access control policy, whether the simulated authentication performed by the cloud management platform on the tenant succeeds, and determine whether the first access control policy formulated by the tenant is available. In the foregoing process, the cloud management platform may be combined with the first access control policy. In the foregoing process, after completing, by using the assignment information formulated by the tenant, the simulated assignment for the first access control policy formulated by the tenant, the cloud management platform displays the obtained second access control policy to the tenant through a visual interface (that is, the preview interface). Therefore, the cloud management platform may not only display, to the tenant, content that is of the second access control policy and that does not change in comparison with the first access control policy, but also display, to the tenant, content that is of the second access control policy and that changes in comparison with the first access control policy. The tenant may check whether the content that does not change (to be specific, content that describes how the cloud management platform performs authentication on the tenant and that is set by the tenant) has a syntax problem or the like, and may further determine whether the content that changes (to be specific, a replacement parameter, for example, the second parameter that replaces the first parameter) meets a requirement of the tenant and a factor to be considered. In this way, a comprehensive factor may be considered for checking the first access control policy, and authentication is performed on the tenant by using the first access control policy obtained through check in this manner, to achieve a better effect.

### BRIEF DESCRIPTION OF DRAWINGS

FIG. 1 is a diagram of a structure of a cloud service system according to an embodiment of this application;
FIG. 2 is a diagram of a policy preview method based on a cloud management platform according to an embodiment of this application;
FIG. 3 is a diagram of a tenant interface according to an embodiment of this application;
FIG. 4 is another diagram of a tenant interface according to an embodiment of this application;
FIG. 5 is another diagram of a tenant interface according to an embodiment of this application;
FIG. 6 is a diagram of a structure of a cloud management platform according to an embodiment of this application;
FIG. 7 is a diagram of a structure of a compute device according to an embodiment of this application;
FIG. 8 is a diagram of a structure of a compute device cluster according to an embodiment of this application; and
FIG. 9 is a diagram in which computer devices in a computer cluster are connected through a network according to an embodiment of this application.

### DESCRIPTION OF EMBODIMENTS

Embodiments of this application provide a policy preview method based on a cloud management platform and a cloud management platform, to help a tenant formulate better access control policies. Therefore, the cloud management platform performs authentication on the tenant according to the access control policies, to achieve a better effect.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances. This is merely a distinguishing manner that is used when objects having a same attribute are described in embodiments of this application. In addition, the terms "include", "have", and any other variants mean to cover a non-exclusive inclusion, so that a process, method, system, product, or device that includes a series of units is not necessarily limited to those units, but may include other units not expressly listed or inherent to such a process, method, product, or device.

In a cloud service system, when a tenant accesses a cloud management platform, the cloud management platform usually needs to perform authentication on the tenant first. Therefore, an attribute-based access control mechanism emerges. The mechanism defines tenant-oriented access control, and can perform authentication on the tenant according to a preset access control policy, to allow or reject access by the tenant based on an authentication result.

In a related technology, the access control policy is usually formulated by the tenant in advance. After receiving the access control policy formulated by the tenant in advance, the cloud management platform stores the access control policy formulated by the tenant. In this case, when the tenant accesses the cloud management platform subsequently, in other words, when the tenant sends a request to the cloud management platform, the cloud management platform may process the access control policy by using the request, to obtain a processed access control policy. In this case, the cloud management platform may determine, based on content expressed by the processed access control policy, whether the authentication on the tenant succeeds.

In the foregoing process, when the tenant sends, to the cloud management platform, the access control policy specified by the tenant, the cloud management platform usually performs only syntax check on the access control policy, so that the tenant can formulate an access control policy with correct syntax. In this case, a factor considered for checking the access control policy is simple. Consequently, an effect of performing authentication on the tenant according to the access control policy obtained in this manner is usually poor.

Further, in a related technology, the cloud management platform performs simulation processing on the access control policy formulated by the tenant. The cloud management platform may notify, based on an access control policy obtained through simulation processing, the tenant whether the access control policy formulated by the tenant has a problem (for example, whether syntax is correct). If there is a problem, and the cloud management platform cannot notify the tenant of a specific problem that occurs in the access control policy formulated by the tenant, this is a black box for the tenant. The tenant can only rewrite a new access control policy, but cannot make improvements only for the problem, resulting in poor tenant experience.

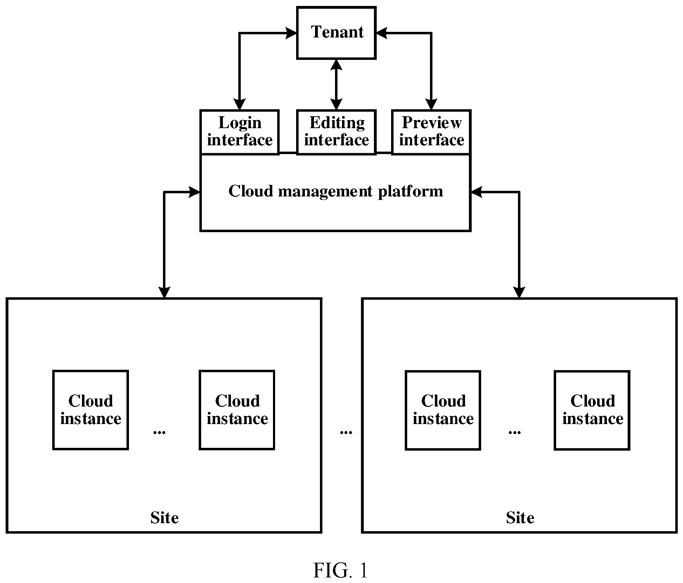

To resolve the foregoing problem, embodiments of this application provide a policy preview method based on a cloud management platform. The method may be implemented by using a cloud service system. FIG. 1 is a diagram of a structure of a cloud service system according to an embodiment of this application. As shown in FIG. 1, the cloud service system includes an infrastructure that can provide a cloud service and a cloud management platform that manages the infrastructure. The following separately describes the cloud management platform and the infrastructure.

The cloud management platform may manage a plurality of cloud instances in the entire cloud service system in a coordinated manner (for example, create a dedicated cloud instance for a tenant, where when the tenant accesses the cloud management platform and sends a request, the cloud management platform performs authentication on the tenant based on the request, and after the authentication succeeds, the cloud management platform may invoke the cloud instance to provide a cloud service for the tenant, and the like), and may be open to tenants outside the system, and respond to their requests. For example, the cloud management platform may provide various interfaces such as a login interface, an editing interface, and a preview interface for a client of a tenant (for example, a terminal device used by the tenant or a browser on the terminal device) to access. The cloud management platform may perform identity authentication on the client of the tenant through the login interface. After the identity authentication succeeds, the client of the tenant may be allowed to log in to the cloud management platform. For another example, the cloud management platform may further allow, through the editing interface, the client of the tenant to send, to the cloud management platform, an access control policy (the access control policy usually includes one or more parameters to which values are to be assigned) for which a value is to be assigned and assignment information (the assignment information may include a value set by the tenant for the parameter to which a value is to be assigned and that is in the access control policy) that are formulated by the tenant. Then, the cloud management platform may assign, in the access control policy for which a value is to be assigned and based on the assignment information, a value to the parameter to which a value is to be assigned, to obtain an access control policy with the value assigned. For another example, the cloud management platform may further send, to the client of the tenant through the preview interface, the access control policy with the value assigned. Therefore, the access control policy with the value assigned may be displayed on the client for the tenant to view and use.

The infrastructure includes a plurality of cloud instances created by the cloud management platform for the tenant. It should be noted that, for any one of the plurality of cloud instances, the cloud instance may be presented in a plurality of manners. For example, the cloud instance may be a physical server specified by the cloud management platform. For another example, the cloud instance may alternatively be a virtual machine (virtual machine, VM) created on a physical server by the cloud management platform by using a virtualization technology. For another example, the cloud instance may alternatively be a container (docker) created on a physical server by the cloud management platform by using a virtualization technology. For another example, the cloud instance may alternatively be a micro virtual machine (microVM) created on a physical server by the cloud management platform by using a virtualization technology. For another example, the cloud instance may alternatively be a container (docker) created on a physical server by the cloud management platform by using a virtualization technology. For another example, the cloud instance may alternatively be a bare metal server specified by the cloud management platform.

Further, the plurality of cloud instances may be disposed at one or more sites, and the sites may be presented in a plurality of forms. For example, the one or more sites may be a plurality of regions (regions) in the infrastructure. For another example, the one or more sites may be a plurality of availability zones (availability zones) in the infrastructure. For still another example, the one or more sites may be at least one edge site, at least one central cloud site, and the like in the infrastructure.

It should be noted that, after the cloud management platform displays, to the tenant for viewing, the access control policy with the value assigned, if the tenant determines that the access control policy with the value assigned is available, the cloud management platform stores the access control policy for which a value is to be assigned and that is formulated by the tenant, and marks, as a tenant-specific access control policy, the access control policy for which a value is to be assigned. When the tenant subsequently accesses the cloud management platform and sends a request, the cloud management platform extracts, from the request, a value of the parameter to which a value is to be assigned and that is in the access control policy for which a value is to be assigned, and assigns a value to the parameter based on the extracted value. If the assignment succeeds, an access control policy with a value assigned again may be obtained. The cloud management platform may determine, based on content of the access control policy with the value assigned again, whether the authentication on the tenant succeeds or fails. If the authentication succeeds, the cloud instance may be invoked to provide a cloud service for the tenant, to respond to the request of the tenant. If the assignment fails, the cloud management platform determines that the authentication on the tenant fails, and rejects the request of the tenant.

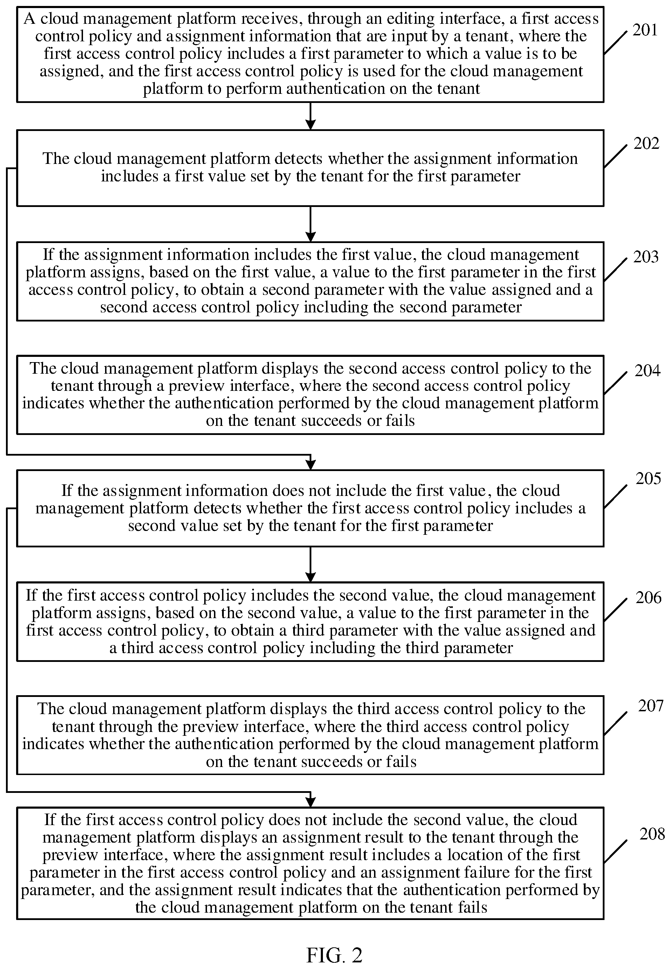

It can be learned that, after receiving the access control policy for which a value is to be assigned and the assignment information that are formulated by the tenant, the cloud management platform may complete simulated assignment by using the access control policy for which a value is to be assigned and the assignment information, to display, to the tenant for preview, an access control policy with the value assigned that is obtained through simulated assignment. After the tenant browses and determines that the access control policy with the value assigned that is obtained through simulated assignment is available, the cloud management platform may store the access control policy for which a value is to be assigned and that is formulated by the tenant. When subsequently receiving a request of the tenant, the cloud management platform completes actual assignment by using the access control policy for which a value is to be assigned and the request of the tenant, to determine, according to the access control policy with the value assigned again, whether the authentication on the tenant succeeds, and determine whether to respond to the request of the tenant. To further understand the process, the following further describes the process with reference to FIG. 2. FIG. 2 is a diagram of a policy preview method based on a cloud management platform according to an embodiment of this application. As shown in FIG. 2, the method includes the following steps.

201: The cloud management platform receives, through an editing interface, a first access control policy and assignment information that are input by a tenant, where the first access control policy includes a first parameter to which a value is to be assigned, and the first access control policy is used for the cloud management platform to perform authentication on the tenant.

In this embodiment, when the tenant has a requirement for formulating an access control policy, the cloud management platform may provide the editing interface (for example, an access control policy input field and a simulated assignment input field that are on a tenant interface) for a client used by the tenant. Therefore, the tenant may send, to the editing interface via the client, the first access control policy (which may also be understood as an access control policy for which a value is to be assigned) and the assignment information (which may also be understood as information related to simulated assignment) that are formulated by the tenant, so that the cloud management platform receives, through the editing interface, the first access control policy and the assignment information that are sent by the client of the tenant.

It should be noted that the first access control policy formulated by the tenant may be presented as a first text written by the tenant. The first text includes one or more first parameters to which values are to be assigned (which may also be understood as variables to which values are to be assigned). Content described in the first text is usually content that the tenant indicates how the cloud management platform performs authentication on the tenant. Because no value is assigned to the first parameter, the content is incomplete and to be supplemented.

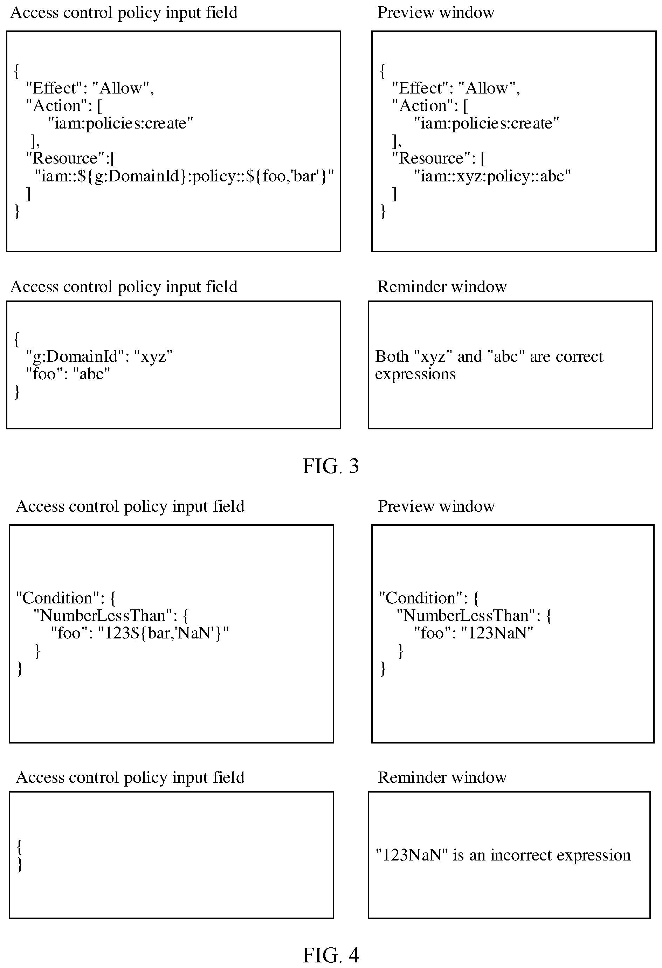

For example, as shown in FIG. 3 (FIG. 3 is a diagram of a tenant interface according to an embodiment of this application), when needing to formulate an access control policy, the tenant may log in to the cloud management platform, so that the cloud management platform can provide the tenant interface for the tenant. In this case, the tenant may input, in an access control policy input field on the tenant interface, an access control policy for which a value is to be assigned:

```
          {
            "Effect": "Allow",
            "Action": [
               "iam:policies:create"
            ],
            "Resource": [
               "iam::$ {g:DomainId} :policy::$ {foo,'bar'}"
            ]
          }
```

According to the access control policy for which a value is to be assigned, content described in the policy is detecting whether an identity identifier (identity document, ID) of the tenant is correct and whether a name of a policy "foo" is correct, to determine whether to allow the tenant to create the policy "foo". It can be learned that the policy includes two parameters to which values are to be assigned. One parameter is a tenant ID "g:DomainId", and the other parameter is the policy "foo". A default value of the policy "foo" is "bar".

In addition, the tenant may further input simulated assignment information in a simulated assignment input field on the tenant interface:

```
          {
            "g:DomainId": "xyz"
            "foo": "abc"
          }
```

It can be learned from the simulated assignment information that a specified value set by the tenant for the tenant ID "g:DomainId" is "xyz", and a specified value set by the tenant for the policy "foo" is "abc".

202: The cloud management platform detects whether the assignment information includes a first value set by the tenant for the first parameter.

After obtaining the first access control policy and the assignment information that are formulated by the tenant, the cloud management platform may detect whether the assignment information includes the first value set by the tenant for the first parameter. If the assignment information includes the first value, step 203 is performed. If the assignment information does not include the first value, step 205 is performed.

203: If the assignment information includes the first value, the cloud management platform assigns, based on the first value, a value to the first parameter in the first access control policy, to obtain a second parameter with the value assigned and a second access control policy including the second parameter.

If the assignment information includes the first value, the cloud management platform may assign, by using the first value, a value to the first parameter in the first access control policy (for example, replace the first parameter with the first value), to obtain the second parameter (for example, the first value that replaces the first parameter) with the value assigned and the second access control policy (which may also be understood as an access control policy with the value assigned) including the second parameter. In this case, the cloud management platform completes simulated assignment for the first access control, to obtain the second access control policy.

It should be noted that the second access control policy obtained by the cloud management platform through simulated assignment may be presented as a second text obtained through simulated assignment. The second text includes one or more second parameters to which values are to be assigned (which may also be understood as variables with values assigned). Content described in the second text is usually content that the tenant indicates how the cloud management platform performs authentication on the tenant. Because a value has been assigned to the second parameter, the content is supplemented and complete. Further, the cloud management platform may determine, based on whether the content has a semantic problem, whether simulated authentication on the tenant succeeds.

Specifically, the cloud management platform may obtain the second access control policy in the following manners.
(1) After obtaining the first access control policy and the assignment information that are formulated by the tenant, the cloud management platform may detect whether the assignment information includes the first value set by the tenant for the first parameter and whether the first access control policy includes a second value set by the tenant for the first parameter.
(2) If the assignment information includes the first value, and the first access control policy does not include the second value, the cloud management platform may directly assign, by using the first value, a value to the first parameter in the first access control policy, to obtain the second parameter with the value assigned and the second access control policy including the second parameter.
(3) If the assignment information includes the first value, and the first access control policy includes the second value, because a priority of the second value is lower than a priority of the first value, the cloud management platform may assign, by using the first value, a value to the first parameter in the first access control policy, to obtain the second parameter with the value assigned and the second access control policy including the second parameter.

Still in the example shown in FIG. 3, after obtaining the access control policy for which a value is to be assigned and the simulated assignment information, the cloud management platform may first parse the policy, to be specific, determine a location of each character string in the policy (for example, the parameter "g:DomainId" is in row 7 and column 11 to row 7 and column 24 in the policy), and traverse each character string, to extract, from the policy, the two parameters "g:DomainId" and "foo" to which values are to be assigned. Then, the cloud management platform may detect whether the simulated assignment information includes specified values of "g:DomainId" and "foo", and whether the policy includes default values of "g:DomainId" and "foo".

Because the simulated assignment information includes the specified value of "g:DomainId", and the access control policy for which a value is to be assigned does not include the default value of "g:DomainId", the cloud management platform may extract the specified value "xyz" of "g:DomainId" from the simulated assignment information, replace "g:DomainId" with "xyz", and then record the following information: The parameter "g:DomainId" in row 7 and column 11 to row 7 and column 24 in the policy is replaced with the specified value "xyz" of row 2 and column 3 to row 2 and column 22 in the simulated assignment information.

Because the simulated assignment information includes the specified value of "foo", the access control policy for which a value is to be assigned includes the default value of "foo", and a priority of the specified value is higher than a priority of the default value, the cloud management platform may extract the specified value "xyz" of "foo" from the simulated assignment information, replace "foo" with "abc", and then record the following information: The parameter "foo" in row 7 and column 33 to row 7 and column 45 in the policy is replaced with the specified value "abc". In this way, the cloud management platform can obtain an access control policy with the value assigned.

It should be understood that, in this embodiment, if there are a plurality of first parameters, both the case (2) and the case (3) may occur, or only one of the case (2) and the case (3) may occur. If there is one first parameter, usually, only one of the case (2) and the case (3) occurs.

204: The cloud management platform displays the second access control policy to the tenant through a preview interface, where the second access control policy indicates whether the authentication performed by the cloud management platform on the tenant succeeds or fails.

After obtaining the second access control policy, the cloud management platform may provide the preview interface (for example, a preview window and a reminder window on the tenant interface) for the client of the tenant, to display the second access control policy on the client of the tenant through the preview interface, so that the tenant determines, based on content of the second access control policy, whether the first access control policy formulated by the tenant is available. If determining that the first access control policy is available, the tenant may notify the cloud management platform via the client of the tenant, so that the cloud management platform stores the first access control policy, and uses the first access control policy as a basis followed for the subsequent authentication on the tenant.

Still in the example shown in FIG. 3, after obtaining the access control policy with the value assigned, the cloud management platform may display, in the preview window on the user interface, the access control policy with the value assigned:

```
{
            "Effect": "Allow",
            "Action": [
               "iam:policies:create"
            ],
            "Resource": [
               "iam::xyz:policy::abc"
            ]
          }
```

Then, the tenant may browse, in the preview window, the access control policy with the value assigned, to determine whether the access control policy formulated by the tenant is available.

Specifically, the cloud management platform may determine, based on whether the content of the second access control policy has a semantic problem, whether the simulated authentication on the tenant succeeds, and display a corresponding result on the client of the tenant through the preview interface, to notify the tenant of the result, so that the tenant more accurately determines whether the first access control policy formulated by the tenant is available. The cloud management platform may notify, in the following manner, the tenant whether the simulated authentication succeeds.

After obtaining the second access control policy, the cloud management platform may obtain preset semantic rules (the semantic rules may include normative expressions that each parameter in the access control policy needs to meet, and the like), and perform, according to the preset semantic rules, semantic analysis on the second parameter included in the second access control policy, to obtain a first semantic analysis result of the second parameter. If the first semantic analysis result indicates that the second parameter complies with the preset semantic rule, that is, indicates that the second access control policy has no semantic problem, the cloud management platform may determine that the simulated authentication on the tenant succeeds. If the first semantic analysis result indicates that the second parameter does not comply with the semantic rule, that is, indicates that the second access control policy has a semantic problem, the cloud management platform may determine that the simulated authentication on the tenant fails.

Then, the cloud management platform may display the first semantic analysis result on the client of the tenant through the preview interface, so that the tenant can view and use the first semantic analysis result. Generally, if the first semantic analysis result indicates that the second parameter complies with the preset semantic rule, the tenant considers that the first access control policy formulated by the tenant is available, and notifies the cloud management platform. If the first semantic analysis result indicates that the second parameter does not comply with the semantic rule, the tenant considers that the first access control policy formulated by the tenant is unavailable, and the tenant may adjust the first access control policy and/or the assignment information.

Still in the example shown in FIG. 3, after obtaining the access control policy with the value assigned, the cloud management platform may obtain the preset semantic rules, and detect, according to the rules, whether "xyz" and "abc" comply with the normative expressions included in the rules. Because both "xyz" and "abc" are correct expressions, the cloud management platform may display, in a reminder window on the tenant interface, that both "xyz" and "abc" are correct expressions. In this way, the tenant may determine that the access control policy for which a value is to be assigned and that is formulated by the tenant is available.

205: If the assignment information does not include the first value, the cloud management platform detects whether the first access control policy includes the second value set by the tenant for the first parameter.

If the assignment information does not include the first value, the cloud management platform may detect whether the first access control policy includes the second value set by the tenant for the first parameter. If the first access control policy includes the second value, step 206 is performed. If the first access control policy does not include the second value, step 208 is performed.

206: If the first access control policy includes the second value, the cloud management platform assigns, based on the second value, a value to the first parameter in the first access control policy, to obtain a third parameter with the value assigned and a third access control policy including the third parameter.

If the first access control policy includes the second value, the cloud management platform may assign, by using the second value, a value to the first parameter in the first access control policy (for example, replace the first parameter with the second value), to obtain the third parameter (for example, the second value that replaces the first parameter) with the value assigned and the third access control policy (which may also be understood as an access control policy with the value assigned) including the third parameter. In this case, the cloud management platform completes simulated assignment for the first access control, to obtain the third access control policy.

It should be noted that the third access control policy obtained by the cloud management platform through simulated assignment may be presented as a third text obtained through simulated assignment. The third text includes one or more third parameters to which values are to be assigned (which may also be understood as variables with values assigned). Content described in the third text is usually content that the tenant indicates how the cloud management platform performs authentication on the tenant. Because a value has been assigned to the third parameter, the content is supplemented and complete. Further, the cloud management platform may determine, based on whether the content has a semantic problem, whether the simulated authentication on the tenant succeeds.

For example, as shown in FIG. 4 (FIG. 4 is another diagram of a tenant interface according to an embodiment of this application), when needing to formulate an access control policy, the tenant may log in to the cloud management platform, so that the cloud management platform can provide the tenant interface for the tenant. In this case, the tenant may input, in an access control policy input field on the tenant interface, an access control policy for which a value is to be assigned:

```
          "Condition": {
            "NumberLessThan": {
               "foo": "123$ {bar,'NaN'}"
            }
          }
```

According to the access control policy for which a value is to be assigned, content described in the policy is detecting whether a value of "foo" in a request of the tenant is less than 123 bar, to determine whether to process the request of the tenant. It can be learned that the policy includes a parameter "bar" to which a value is to be assigned, and a default value of the parameter "bar" is "NaN".

In addition, the tenant may further input simulated assignment information in a simulated assignment input field on the tenant interface:

```
          {
          }
```

It can be learned that the simulated assignment information input by the tenant is blank content.

After obtaining the access control policy for which a value is to be assigned and the simulated assignment information, the cloud management platform may first parse the policy, that is, determine a location of each character string in the policy, and traverse each character string, to extract, from the policy, the parameter "bar" to which a value is to be assigned. Then, the cloud management platform may detect whether the simulated assignment information includes a specified value of "bar", and whether the policy includes a default value of "bar".

Because the simulated assignment information does not include the specified value of "bar", and the access control policy for which a value is to be assigned includes the default value of "bar", the cloud management platform may extract the default value "NaN" of "bar" from the access control policy for which a value is to be assigned, replace "bar" with "NaN", and then record corresponding information. In this way, the cloud management platform can obtain an access control policy with the value assigned.

207: The cloud management platform displays the third access control policy to the tenant through the preview interface, where the third access control policy indicates whether the authentication performed by the cloud management platform on the tenant succeeds or fails.

After obtaining the third access control policy, the cloud management platform may provide the preview interface for the client of the tenant, to display the third access control policy on the client of the tenant through the preview interface, so that the tenant determines, based on content of the third access control policy, whether the first access control policy formulated by the tenant is available. If determining that the first access control policy is available, the tenant may notify the cloud management platform via the client of the tenant, so that the cloud management platform stores the first access control policy, and uses the first access control policy as a basis followed for the subsequent authentication on the tenant.

Still in the example shown in FIG. 4, after obtaining the access control policy with the value assigned, the cloud management platform may display, in a preview window on the user interface, the access control policy with the value assigned:

```
          "Condition": {
            "NumberLessThan": {
               "foo": "123NaN"
            }
          }
```

Then, the tenant may browse, in the preview window, the access control policy with the value assigned, to determine whether the access control policy formulated by the tenant is available.

Specifically, the cloud management platform may determine, based on whether the content of the third access control policy has a semantic problem, whether the simulated authentication on the tenant succeeds, and display a corresponding result on the client of the tenant through the preview interface, to notify the tenant of the result, so that the tenant more accurately determines whether the first access control policy formulated by the tenant is available. The cloud management platform may notify, in the following manner, the tenant whether the simulated authentication succeeds.

After obtaining the third access control policy, the cloud management platform may obtain a preset semantic rule, and perform, according to the preset semantic rule, semantic analysis on the third parameter included in the third access control policy, to obtain a second semantic analysis result of the third parameter. If the second semantic analysis result indicates that the third parameter complies with the preset semantic rule, that is, indicates that the third access control policy has no semantic problem, the cloud management platform may determine that the simulated authentication on the tenant succeeds. If the second semantic analysis result indicates that the third parameter does not comply with the semantic rule, that is, indicates that the third access control policy has a semantic problem, the cloud management platform may determine that the simulated authentication on the tenant fails.

Then, the cloud management platform may display the second semantic analysis result on the client of the tenant through the preview interface, so that the tenant can view and use the second semantic analysis result. Generally, if the second semantic analysis result indicates that the third parameter complies with the preset semantic rule, the tenant considers that the first access control policy formulated by the tenant is available, and notifies the cloud management platform. If the second semantic analysis result indicates that the third parameter does not comply with the semantic rule, the tenant considers that the first access control policy formulated by the tenant is unavailable, and the tenant may adjust the first access control policy and/or the assignment information.

Still in the example shown in FIG. 4, after obtaining the access control policy with the value assigned, the cloud management platform may obtain preset semantic rules, and detect, according to the rules, whether "123NaN" complies with normative expressions included in the rules. Because "123NaN" is an incorrect expression, the cloud management platform may display, in a reminder window on the tenant interface, that "123NaN" is an incorrect expression. In this way, the tenant may determine that the access control policy for which a value is to be assigned and that is formulated by the tenant is unavailable, and then re-adjust the policy and/or the simulated assignment information.

208: If the first access control policy does not include the second value, the cloud management platform displays an assignment result to the tenant through the preview interface, where the assignment result includes a location of the first parameter in the first access control policy and notification information indicating that assignment to the first parameter fails, and the assignment result indicates that the authentication performed by the cloud management platform on the tenant fails.

If the first access control policy does not include the second value, the cloud management platform cannot assign a value to the first parameter. Therefore, the cloud management platform may directly determine that the simulated assignment for the first access control policy cannot be completed, that is, directly determine that the simulated authentication on the tenant fails. For this case, the cloud management platform may generate the assignment result indicating this case. The assignment result includes the location of the first parameter in the first access control policy and the notification information indicating that the assignment to the first parameter fails. Therefore, the preview interface may be provided for the client of the tenant, to display the assignment result on the client of the tenant through the preview interface. In this case, after viewing the assignment result, the tenant may determine that the first access control policy formulated by the tenant is unavailable, and re-adjust the first access control policy and/or the assignment information.

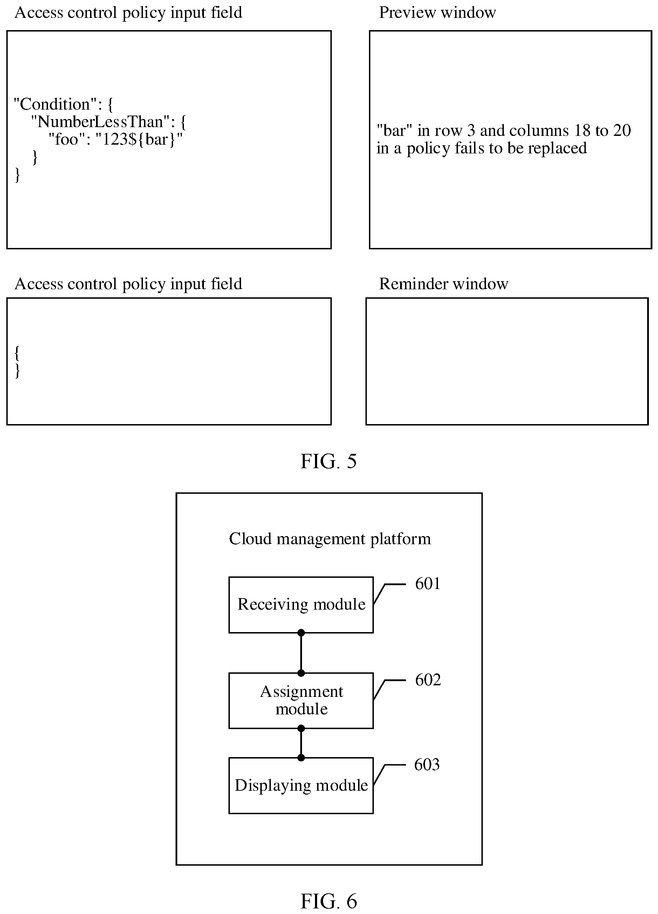

For example, as shown in FIG. 5 (FIG. 5 is another diagram of a tenant interface according to an embodiment of this application), when needing to formulate an access control policy, the tenant may log in to the cloud management platform, so that the cloud management platform can provide the tenant interface for the tenant. In this case, the tenant may input, in an access control policy input field on the tenant interface, an access control policy for which a value is to be assigned:

```
          "Condition": {
            "NumberLessThan": {
               "foo": "123${bar}"
            }
          ]
```

According to the access control policy for which a value is to be assigned, content described in the policy is detecting whether a value of "foo" in a request of the tenant is less than 123 bar, to determine whether to process the request of the tenant. It can be learned that the policy includes a parameter "bar" to which a value is to be assigned.

In addition, the tenant may further input simulated assignment information in a simulated assignment input field on the tenant interface:

```
          {
          }
```

It can be learned that the simulated assignment information input by the tenant is blank content.

After obtaining the access control policy for which a value is to be assigned and the simulated assignment information, the cloud management platform may first parse the policy, that is, determine a location of each character string in the policy, and traverse each character string, to extract, from the policy, the parameter "bar" to which a value is to be assigned. Then, the cloud management platform may detect whether the simulated assignment information includes a specified value of "bar", and whether the policy includes a default value of "bar".

Because the simulated assignment information does not include the specified value of "bar", and the access control policy for which a value is to be assigned does not include the default value of "bar", the cloud management platform cannot replace "bar", and displays the following assignment result in a preview window of the user interface: "bar" in row 3 and columns 18 to 20 in the policy fails to be replaced. In this way, the tenant may determine that the access control policy for which a value is to be assigned and that is formulated by the tenant is unavailable, and then re-adjust the policy and/or the simulated assignment information.

In embodiments of this application, when a tenant needs to formulate an access control policy, a cloud management platform may provide an editing interface for the tenant, so that the tenant inputs, to the editing interface, a first access control policy and assignment information that are formulated by the tenant. Therefore, the cloud management platform may receive, through the editing interface, the first access control policy and the assignment information that are from the tenant. The first access control policy includes a first parameter to which a value is to be assigned, and the first access control policy may be used for the cloud management platform to perform simulated authentication on the tenant. Then, the cloud management platform may detect whether the assignment information includes a first value set by the tenant for the first parameter. If the assignment information includes the first value, the cloud management platform performs, based on the first value, simulated assignment to the first parameter in the first access control policy, to obtain a second parameter with the value assigned and a second access control policy including the second parameter. Then, the cloud management platform may display the second access control policy to the tenant through a preview interface, so that the tenant can determine, based on content of the second access control policy, whether the simulated authentication performed by the cloud management platform on the tenant succeeds, and determine whether the first access control policy formulated by the tenant is available. In the foregoing process, the cloud management platform may be combined with the first access control policy. In the foregoing process, after completing, by using the assignment information formulated by the tenant, the simulated assignment for the first access control policy formulated by the tenant, the cloud management platform displays the obtained second access control policy to the tenant through a visual interface (that is, the preview interface). Therefore, the cloud management platform may not only display, to the tenant, content that is of the second access control policy and that does not change in comparison with the first access control policy, but also display, to the tenant, content that is of the second access control policy and that changes in comparison with the first access control policy. The tenant may check whether the content that does not change (to be specific, content that describes how the cloud management platform performs authentication on the tenant and that is set by the tenant) has a syntax problem or the like, and may further determine whether the content that changes (to be specific, a replacement parameter, for example, the second parameter that replaces the first parameter) meets a requirement of the tenant and a factor to be considered. In this way, a comprehensive factor may be considered for checking the first access control policy, and authentication is performed on the tenant by using the first access control policy obtained through check in this manner, to achieve a better effect.

Further, if the cloud management platform determines that a semantic problem (for example, the second parameter that replaces the first parameter or a third parameter that replaces the first parameter does not comply with a preset semantic rule) occurs in content that is of the second access control policy or a third access control policy and that changes in comparison with the first access control policy, the cloud management platform may further notify the tenant through the visual interface (that is, the preview interface). In this case, the tenant performs targeted adjustment on the first access control policy and/or the assignment information that are/is formulated by the tenant, to improve user experience and policy adjustment efficiency.

The foregoing is detailed descriptions of the policy preview method based on the cloud management platform provided in embodiments of this application. The following describes the cloud management platform provided in embodiments of this application. FIG. 6 is a diagram of a structure of a cloud management platform according to an embodiment of this application. As shown in FIG. 6, the cloud management platform includes:
a receiving module 601, configured to receive, through an editing interface, a first access control policy and assignment information that are input by a tenant, where the first access control policy includes a first parameter to which a value is to be assigned, and the first access control policy is used for the cloud management platform to perform authentication on the tenant, where for example, the receiving module 601 may be configured to implement step 201 in the embodiment shown in FIG. 2;
an assignment module 602, configured to: if the assignment information includes a first value set by the tenant for the first parameter, assign, based on the first value, a value to the first parameter in the first access control policy, to obtain a second parameter with the value assigned and a second access control policy including the second parameter, where for example, the assignment module 602 may be configured to implement step 202 and step 203 in the embodiment shown in FIG. 2; and
a displaying module 603, configured to display the second access control policy to the tenant through a preview interface, where the second access control policy indicates whether the authentication performed by the cloud management platform on the tenant succeeds or fails, where for example, the displaying module 603 may be configured to implement step 204 in the embodiment shown in FIG. 2.

In a possible implementation, the assignment module 602 is configured to: if the assignment information includes the first value, and the first access control policy does not include a second value set by the tenant for the first parameter, assign, based on the first value, a value to the first parameter in the first access control policy, to obtain the second parameter with the value assigned and the second access control policy including the second parameter.

In a possible implementation, the assignment module 602 is configured to: if the assignment information includes the first value, and the first access control policy includes the second value set by the tenant for the first parameter, assign, based on the first value, a value to the first parameter in the first access control policy, to obtain the second parameter with the value assigned and the second access control policy including the second parameter.

In a possible implementation, the assignment module 602 is further configured to: if the assignment information does not include the first value, and the first access control policy includes the second value set by the tenant for the first parameter, assign, based on the second value, a value to the first parameter in the first access control policy, to obtain a third parameter with the value assigned and a third access control policy including the third parameter. The displaying module 603 is further configured to display the third access control policy to the tenant through the preview interface, where the third access control policy indicates whether the authentication performed by the cloud management platform on the tenant succeeds or fails.

In a possible implementation, the assignment module 602 is further configured to: if the assignment information does not include the first value, and the first access control policy does not include the second value set by the tenant for the first parameter, display an assignment result to the tenant through the preview interface, where the assignment result includes a location of the first parameter in the first access control policy and notification information indicating that assignment to the first parameter fails, and the assignment result indicates that the authentication performed by the cloud management platform on the tenant fails.

In a possible implementation, the cloud management platform further includes: a semantic analysis module, configured to perform, according to a preset semantic rule, semantic analysis on the second parameter, to obtain a first semantic analysis result of the second parameter, where if the first semantic analysis result indicates that the second parameter complies with the semantic rule, the second access control policy indicates that the authentication performed by the cloud management platform on the tenant succeeds, or if the first semantic analysis result indicates that the second parameter does not comply with the semantic rule, the second access control policy indicates that the authentication performed by the cloud management platform on the tenant fails. The displaying module 603 is further configured to display the first semantic analysis result to the tenant through the preview interface.

In a possible implementation, the cloud management platform further includes: a semantic analysis module, configured to perform, according to a preset semantic rule, semantic analysis on the third parameter, to obtain a second semantic analysis result of the third parameter, where if the second semantic analysis result indicates that the third parameter complies with the semantic rule, the third access control policy indicates that the authentication performed by the cloud management platform on the tenant succeeds, or if the second semantic analysis result indicates that the third parameter does not comply with the semantic rule, the third access control policy indicates that the authentication performed by the cloud management platform on the tenant fails. The displaying module 603 is further configured to display the second semantic analysis result to the tenant through the preview interface.

It should be noted that, content such as information exchange between the modules/units of the foregoing apparatus and an implementation process is based on the same concept as the method embodiment of this application, and produces the same technical effects as those of the method embodiment of this application. For specific content, refer to the foregoing descriptions in the method embodiment of embodiments of this application. Details are not described herein again.

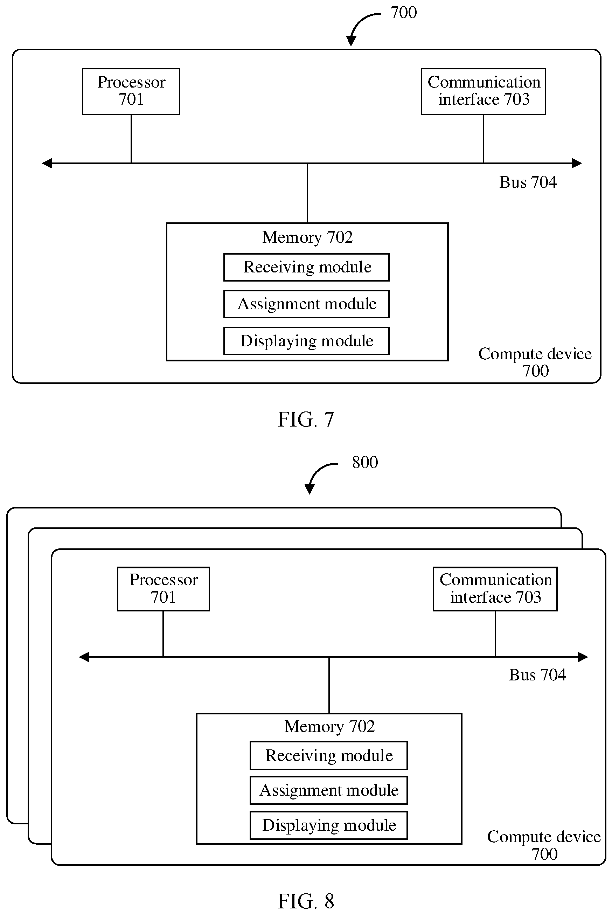

FIG. 7 is a diagram of a structure of a compute device according to an embodiment of this application. As shown in FIG. 7, the compute device 700 (which may be configured to present the foregoing cloud management platform) includes a processor 701, a memory 702, a communication interface 703, and a bus 704. The processor 701, the memory 702, and the communication interface 703 are coupled through a bus (not marked in the figure). The memory 702 stores instructions. When executable instructions in the memory 702 are executed, the compute device 700 performs the method performed by the cloud management platform in the foregoing method embodiment.

The compute device 700 may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when units in an apparatus may be implemented in a form of scheduling a program by a processing element, the processing element may be a general-purpose processor, for example, a central processing unit (central processing unit, CPU) or another processor that can invoke the program. For still another example, the units may be integrated and implemented in a form of a system-on-a-chip (system-on-a-chip, SoC).

The processor 701 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The memory 702 may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 702 stores executable program code. The processor 701 executes the executable program code to separately implement functions of the foregoing modules such as the receiving module, the assignment module, and the displaying module, to implement the foregoing policy preview method based on the cloud management platform. In other words, the memory 702 stores instructions used to perform the foregoing policy preview method based on the cloud management platform.

The communication interface 703 uses a transceiver module, for example, but not limited to, a network interface card or a transceiver, to implement communication between the compute device 700 and another device or a communication network.

In addition to a data bus, the bus 704 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. The bus may be classified into an address bus, a data bus, a control bus, and the like.

FIG. 8 is a diagram of a structure of a compute device cluster according to an embodiment of this application. As shown in FIG. 8, the compute device cluster 800 includes at least one compute device 700.

As shown in FIG. 8, the compute device cluster 800 includes the at least one compute device 700. A memory 702 in the one or more compute devices 700 in the compute device cluster 800 may store same instructions used to perform the foregoing policy preview method based on the cloud management platform.

In some possible implementations, the memory 702 in the one or more compute devices 700 in the compute device cluster 800 may alternatively separately store some instructions used to perform the foregoing policy preview method based on the cloud management platform. In other words, a combination of the one or more compute devices 700 may jointly perform the foregoing policy preview method based on the cloud management platform.

It should be noted that memories 702 in different compute devices 700 in the compute device cluster 800 may store different instructions, to separately perform some functions of the foregoing cloud management platform. In other words, the instructions stored in the memories 702 in the different compute devices 700 may implement functions of one or more of modules such as a receiving module, an assignment module, and a displaying module.

In some possible implementations, the one or more compute devices 700 in the compute device cluster 800 may be connected through a network. The network may be a wide area network, a local area network, or the like.

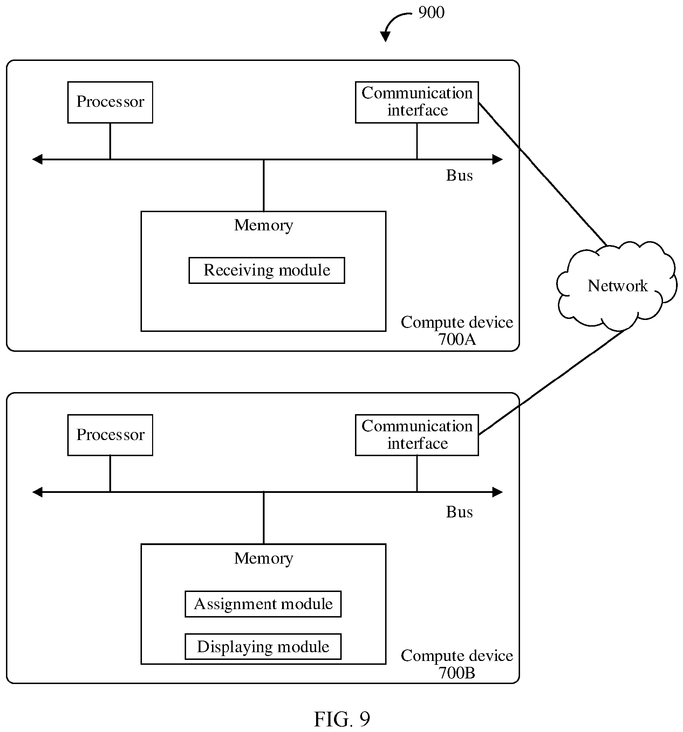

FIG. 9 is a diagram in which computer devices in a computer cluster are connected through a network according to an embodiment of this application. As shown in FIG. 9, two compute devices 700A and 700B are connected through a network. Specifically, each compute device is connected to the network through a communication interface in the compute device.

In a possible implementation, a memory in the compute device 700A stores instructions for performing functions of modules like a receiving module. In addition, a memory in the compute device 700B stores instructions for performing functions of modules such as an assignment module and a displaying module.

It should be understood that functions of the compute device 700A shown in FIG. 9 may alternatively be completed by a plurality of compute devices. Similarly, functions of the compute device 700B may alternatively be completed by a plurality of compute devices.

An embodiment of this application further relates to a computer storage medium. The computer storage medium stores a program used for signal processing. When the program is run on a computer, the computer is caused to perform the steps performed by the cloud management platform in the embodiment shown in FIG. 2.

An embodiment of this application further relates to a computer program product. The computer program product stores instructions. When the instructions are executed by a computer, the computer is caused to perform the steps performed by the cloud management platform in the embodiment shown in FIG. 2.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in another manner. For example, the described apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. Indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to a conventional technology, or all or some of the technical solutions may be implemented in a form of a software product. The computer software product is stored in a storage medium and includes several instructions for instructing a computer device (which may be a personal computer, a server, a network device, or the like) to perform all or some of the steps of the method described in embodiments of this application. The foregoing storage medium includes any medium that can store program code, for example, a USB flash drive, a removable hard disk, a read-only memory (ROM, read-only memory), a random access memory (RAM, random access memory), a magnetic disk, or an optical disc.

## Claims

1. A policy preview method based on a cloud management platform, wherein the method comprises:
receiving, by a cloud management platform through an editing interface, a first access control policy and assignment information that are input by a tenant, wherein the first access control policy comprises a first parameter to which a value is to be assigned, and the first access control policy is used for the cloud management platform to perform authentication on the tenant;
if the assignment information comprises a first value set by the tenant for the first parameter, assigning, by the cloud management platform based on the first value, a value to the first parameter in the first access control policy, to obtain a second parameter with the value assigned and a second access control policy comprising the second parameter; and
displaying, by the cloud management platform, the second access control policy to the tenant through a preview interface, wherein the second access control policy indicates whether the authentication performed by the cloud management platform on the tenant succeeds or fails.

2. The method according to claim 1, wherein the if the assignment information comprises the first value set by the tenant for the first parameter, assigning, by the cloud management platform based on the first value, the value to the first parameter in the first access control policy, to obtain the second parameter with the value assigned and the second access control policy comprising the second parameter comprises:
if the assignment information comprises the first value, and the first access control policy does not comprise a second value set by the tenant for the first parameter, assigning, by the cloud management platform based on the first value, a value to the first parameter in the first access control policy, to obtain the second parameter with the value assigned and the second access control policy comprising the second parameter.

3. The method according to claim 1 or 2, wherein the if the assignment information comprises the first value set by the tenant for the first parameter, assigning, by the cloud management platform based on the first value, the value to the first parameter in the first access control policy, to obtain the second parameter with the value assigned and the second access control policy comprising the second parameter comprises:
if the assignment information comprises the first value, and the first access control policy comprises the second value set by the tenant for the first parameter, assigning, by the cloud management platform based on the first value, a value to the first parameter in the first access control policy, to obtain the second parameter with the value assigned and the second access control policy comprising the second parameter.

4. The method according to any one of claims 1 to 3, wherein the method further comprises:
if the assignment information does not comprise the first value, and the first access control policy comprises the second value set by the tenant for the first parameter, assigning, by the cloud management platform based on the second value, a value to the first parameter in the first access control policy, to obtain a third parameter with the value assigned and a third access control policy comprising the third parameter; and
displaying, by the cloud management platform, the third access control policy to the tenant through the preview interface, wherein the third access control policy indicates whether the authentication performed by the cloud management platform on the tenant succeeds or fails.

5. The method according to any one of claims 1 to 4, wherein the method further comprises:
if the assignment information does not comprise the first value, and the first access control policy does not comprise the second value set by the tenant for the first parameter, displaying, by the cloud management platform, an assignment result to the tenant through the preview interface, wherein the assignment result comprises a location of the first parameter in the first access control policy and notification information indicating that assignment to the first parameter fails, and the assignment result indicates that the authentication performed by the cloud management platform on the tenant fails.

6. The method according to claim 2 or 3, wherein the method further comprises:
performing, by the cloud management platform according to a preset semantic rule, semantic analysis on the second parameter, to obtain a first semantic analysis result of the second parameter, wherein if the first semantic analysis result indicates that the second parameter complies with the semantic rule, the second access control policy indicates that the authentication performed by the cloud management platform on the tenant succeeds, or if the first semantic analysis result indicates that the second parameter does not comply with the semantic rule, the second access control policy indicates that the authentication performed by the cloud management platform on the tenant fails; and
displaying, by the cloud management platform, the first semantic analysis result to the tenant through the preview interface.

7. The method according to claim 4, wherein the method further comprises:
performing, by the cloud management platform according to a preset semantic rule, semantic analysis on the third parameter, to obtain a second semantic analysis result of the third parameter, wherein if the second semantic analysis result indicates that the third parameter complies with the semantic rule, the third access control policy indicates that the authentication performed by the cloud management platform on the tenant succeeds, or if the second semantic analysis result indicates that the third parameter does not comply with the semantic rule, the third access control policy indicates that the authentication performed by the cloud management platform on the tenant fails; and
displaying, by the cloud management platform, the second semantic analysis result to the tenant through the preview interface.

8. A cloud management platform, wherein the cloud management platform comprises:
a receiving module, configured to receive, through an editing interface, a first access control policy and assignment information that are input by a tenant, wherein the first access control policy comprises a first parameter to which a value is to be assigned, and the first access control policy is used for the cloud management platform to perform authentication on the tenant;
an assignment module, configured to: if the assignment information comprises a first value set by the tenant for the first parameter, assign, based on the first value, a value to the first parameter in the first access control policy, to obtain a second parameter with the value assigned and a second access control policy comprising the second parameter; and
a displaying module, configured to display the second access control policy to the tenant through a preview interface, wherein the second access control policy indicates whether the authentication performed by the cloud management platform on the tenant succeeds or fails.

9. The cloud management platform according to claim 8, wherein the assignment module is configured to:
if the assignment information comprises the first value, and the first access control policy does not comprise a second value set by the tenant for the first parameter, assign, based on the first value, a value to the first parameter in the first access control policy, to obtain the second parameter with the value assigned and the second access control policy comprising the second parameter.

10. The cloud management platform according to claim 8 or 9, wherein the assignment module is configured to:
if the assignment information comprises the first value, and the first access control policy comprises the second value set by the tenant for the first parameter, assign, based on the first value, a value to the first parameter in the first access control policy, to obtain the second parameter with the value assigned and the second access control policy comprising the second parameter.

11. The cloud management platform according to any one of claims 8 to 10, wherein the assignment module is further configured to: if the assignment information does not comprise the first value, and the first access control policy comprises the second value set by the tenant for the first parameter, assign, based on the second value, a value to the first parameter in the first access control policy, to obtain a third parameter with the value assigned and a third access control policy comprising the third parameter; and
the displaying module is further configured to display the third access control policy to the tenant through the preview interface, wherein the third access control policy indicates whether the authentication performed by the cloud management platform on the tenant succeeds or fails.

12. The cloud management platform according to any one of claims 8 to 11, wherein the assignment module is further configured to: if the assignment information does not comprise the first value, and the first access control policy does not comprise the second value set by the tenant for the first parameter, display an assignment result to the tenant through the preview interface, wherein the assignment result comprises a location of the first parameter in the first access control policy and notification information indicating that assignment to the first parameter fails, and the assignment result indicates that the authentication performed by the cloud management platform on the tenant fails.

13. The cloud management platform according to claim 9 or 10, wherein the cloud management platform further comprises:
a semantic analysis module, configured to perform, according to a preset semantic rule, semantic analysis on the second parameter, to obtain a first semantic analysis result of the second parameter, wherein if the first semantic analysis result indicates that the second parameter complies with the semantic rule, the second access control policy indicates that the authentication performed by the cloud management platform on the tenant succeeds, or if the first semantic analysis result indicates that the second parameter does not comply with the semantic rule, the second access control policy indicates that the authentication performed by the cloud management platform on the tenant fails; and
the displaying module is further configured to display the first semantic analysis result to the tenant through the preview interface.

14. The cloud management platform according to claim 11, wherein the cloud management platform further comprises:
a semantic analysis module, configured to perform, according to a preset semantic rule, semantic analysis on the third parameter, to obtain a second semantic analysis result of the third parameter, wherein if the second semantic analysis result indicates that the third parameter complies with the semantic rule, the third access control policy indicates that the authentication performed by the cloud management platform on the tenant succeeds, or if the second semantic analysis result indicates that the third parameter does not comply with the semantic rule, the third access control policy indicates that the authentication performed by the cloud management platform on the tenant fails; and
the displaying module is further configured to display the second semantic analysis result to the tenant through the preview interface.

15. A compute device cluster, wherein the compute device cluster comprises at least one compute device, and each compute device comprises a processor and a memory, wherein
the memory is configured to store instructions; and
the processor is configured to cause, according to the instructions, the compute device cluster to perform the method according to any one of claims 1 to 7.

16. A computer storage medium, wherein the computer storage medium stores one or more instructions, and when the instructions are executed by one or more computers, the one or more computers are caused to perform the method according to any one of claims 1 to 7.

17. A computer program product, wherein the computer program product stores instructions, and when the instructions are executed by a computer, the computer is caused to perform the method according to any one of claims 1 to 7.
